# EUROPÄISCHE PATENTSCHRIFT

(11) **EP 3 804 101 B1**
(45) Veröffentlichungstag und Bekanntmachung des Hinweises auf die Patenterteilung: **07.06.2023**
(21) Anmeldenummer: 19711326.9
(22) Anmeldetag: 13.03.2019
(51) Int. Cl.: H02K 11/25, H02K 11/35, G01R 31/34, H02H 7/085

(54) **ELEKTROMOTOR**
ELECTRIC MOTOR
MOTEUR ÉLECTRIQUE

(30) Priorität: 08.06.2018 DE 202018103227 U
(43) Veröffentlichungstag der Anmeldung: 14.04.2021
(73) Patentinhaber: Inter Control Hermann Köhler Elektrik GmbH & Co. KG, 90411 Nürnberg (DE)
(72) Erfinder: PÖSSNICKER, Peter, 90562 Heroldsberg (DE)
(74) Vertreter: Stippl Patentanwälte
(86) Internationale Anmeldenummer: PCT/EP2019/056345
(87) Internationale Veröffentlichungsnummer: WO 2019/233643

(56) Entgegenhaltungen:
- EP-A1- 3 301 654
- US-A- 5 257 863
- US-A1- 2002 038 192
- US-A1- 2005 035 874
- Christian Pätz: "Das 868-Mhz-Frequenzband optimal nutzen", , 1. Februar 2015 (2015-02-01), Seiten 16-17, XP055595421, Gefunden im Internet: URL:https://www.tu-chemnitz.de/etit/sse/sz ee/rsrc/elektroniknetArtikel022015.pdf [gefunden am 2019-06-11]

## Beschreibung

Die vorliegende Neuerung betrifft ein System umfassend einen Elektromotor, speziell Universalmotor für AC und / oder DC und brushless Motor, sowie eine externe Empfangseinheit. Ein typisches Anwendungsfeld von Universalmotoren sind Antriebe mit Geschwindigkeitssteuerung. Brushless Typen sind dort gefordert, wo bei kleiner kompakter Bauform hohe Leistungen abgefragt werden.

### Technologischer Hintergrund

Elektromotoren mit kompakter Bauform werden besonders auf Effizienz getrimmt. Nicht selten werden Wirkungsgrade bis zu 95% erreicht. Sie besitzen häufig zylindrische Form. Elektromotoren von Baugrößen im Bereich von z.B. 30x60 mm (zylindrische Bauform) sind in der Lage, kurzzeitig bis zu 1.000 Watt Leistung abzugeben. In vielen Fällen ist zur Gewährleistung einer Kühlwirkung ein Ventilationsrad mit der Motorachse (Rotor) verbunden. Im Falle einer Rotorblockade entfällt jedoch die hierdurch verursachte Kühlwirkung.

Universalmotoren, die mit Wechselstrom (AC) und Gleichstrom (DC) betrieben werden können, besitzen als typisches Merkmal einen Kollektor. Der Rotor trägt hierbei die Ankerwicklung, je nach Ausführung gepaart mit einer Statorwicklung oder einem Permanentmagneten. Diese Art von Motoren wird besonders im Werkzeugbereich und vor allem auch bei kleinen Haushaltsgeräten (Rührstäbe, Kaffeemaschinen, Bohrmaschinen und dergleichen) eingesetzt, da bei dieser Motorbauart eine präzise Geschwindigkeitskontrolle gegeben ist. Die Bauformen sowie Leistungsbereiche rangieren in ähnlichen Größenordnungen wie bei bürstenlosen Motoren, jedoch mit schlechterem Wirkungsgrad.

Grundsätzlich gibt es derzeit bei markterhältlichen Motoren der vorgenannten Bauweise keinen wirksamen thermischen Schutz des Ankers, egal ob der Anker mit einer Ankerwicklung oder mit Permanentmagneten wie z.B. bei den brushless Typen versehen ist. Deren Permanentmagnete haben die negative Eigenschaft, ihr Magnetfeld mit steigender Temperatur zu verlieren, sodass bei geschlossenen Regelkreisen die Ansteuerleistung erhöht werden muss, um den Drehzahlverlust zu kompensieren. Dies führt zu einem schnellen Überhitzen des Ankers oder der Permanentmagnete bzw. zu einer Schädigung der Drahtisolation im Anker.

Als "normal" und abhängig von der Leistungsklasse sind Temperaturen im Bereich von 80-130°C anzusehen. Die üblicherweise eingesetzte Drahtisolation besteht aus Polyurethan (kritische Temperatur: 155°C), Polyesterimid (kritische Temperatur: 200°C) sowie Polyimid (kritische Temperatur: 300°C). Die angegebenen kritischen Temperaturen sind maximale thermische Belastungswerte, bei denen sich noch keine nachhaltige Strukturschädigung einstellt. Die Dauergebrauchstemperatur liegt bei ca. 75% davon. Je nach Motorleistungsklasse / - konstruktion und Betriebsart werden bei einer Blockade innerhalb von 15s Temperaturen über 200°C an der Ankerwicklung erreicht.

Bekannt sind sogenannte Motorschutzschalter, die die Belastung lediglich über die aufgenommene Leistung oder in Verbindung mit der Temperatur des Motorgehäuses detektieren. Diese Variante zeichnet sich durch eine zeitliche (thermische) Trägheit aus, die im Fall der oben beschriebenen Motortypen nicht anwendbar ist: Zulässig, in Abhängigkeit der kompakten Bauform und Leistungsklasse sind max. 12s Rotorblockade bei Ansteuerung mit Nennlast. Sollte der Motor vor dem Rotorstillstand partiell überlastet worden sein, ist diese max. Zeit geringer. Darüber hinaus kann die Drahtisolation schmelzen und durch die dann herbei geführten Kurzschlüsse einen Brand verursachen.

Die aktuellen Gegenmaßnahmen zu den obigen Problemen bestehen darin, dass Motoren üblicherweise überdimensioniert werden zu Lasten der Herstellkosten, des Gewichts und des Gehäuses.

### Druckschriftlicher Stand der Technik

Ein Elektromotor gemäß dem Oberbegriff des Anspruchs 1 ist aus der US 5 257 863 bekannt. Konkret zeigt diese Schrift einen elektronischen Rotortemperatursensor für einen Elektromotor oder Generator. Zur Erfassung der Temperatur ist am Rotor eine Mehrzahl von Sensoreinheiten mit zugehörigem Funksender zur Vermeidung einer Unwucht gegenüberliegend in dafür vorgesehenen Ausnehmungen am Rotor angeordnet. Unmittelbar am Stator des Elektromotors oder Generators sind an den entsprechenden Rotationspositionen der Sensoreinheiten Antennen positioniert, die analoge Funksignale (Bursts) der zugehörigen Sensoreinheit empfangen und per Verdrahtung an einen Konnektor weiterleiten, wo sie abgegriffen werden können.

Bei der aus der US 2002/0038192 A1 bekannten Anordnung sind digitale Temperatursensoren auf der Rotorwindung angeordnet. Die digitalen Messsignale der Temperatursensoren werden über optisch mittels Infrarotsignale an eine Kommunikationseinheit übermittelt und von dort über eine Sammelschiene einer Verarbeitungseinheit zugeführt. Die elektrische Energie für die Temperatursensoren kann durch eine Batterie, durch eine Solarzelle oder durch Streuinduktion aus den elektrischen Feldern bereitgestellt werden.

Christian Pätz, "Das 868-Mhz-Frequenzband optimal nutzen", (20150201), pages 16 - 17, URL: https://www.tuchemnitz.de/etit/sse/szee/rsrc/elektroniknetArtikel022015.pd, beschreibt die Anwendung des 868-MHz-Frequenzbandes für Sensor- und Aktornetze.

Aus der US 2005/0035874 A1 ist ein Bohrgestänge mit jeweils einem im unteren sowie oberen Bohrgestängebereich befindlichen Netzwerkknoten bekannt, wobei Betriebsdaten einschließlich Sensordaten vom dem unteren Netzwerkknoten zum oberen Netzwerkknoten in Form von Datenpaketen übertragen werden können.

Die EP 3 301 654 A1 beschreibt eine Einrichtung zur Überwachung der Temperatur einer rotierenden Flugzeugkomponente, die einen in der Nähe der rotierenden Flugzeugkomponente angeordneten Temperatursensor aufweist. Die Temperatursensordaten werden über eine Leitungsverbindung einem Speicher zugeführt und dort gespeichert. Danach werden die gespeicherten Daten per Funk weiter an eine Remoteeinrichtung übertragen.

Die US 2011/273121 A1 offenbart eine einen Stator sowie einen Rotor aufweisende elektrische Maschine mit Temperaturaufzeichnung. Die Maschine umfasst einen auf dem Rotor befindlichen Temperatursensor mit Transmitter, der die Sensordaten per RFID an einen Receiver überträgt, der in der Nähe des Transmitters entweder innerhalb des Maschinengehäuses oder an dessen Außenseite positioniert ist.

Aus der DE 10 2011 017 532 A1 ist ein Kommutator für eine elektrische Maschine, insbesondere für einen Starter einer Brennkraftmaschine, bekannt, bei dem als thermische Überlastsicherung ein thermisch verformbares Kurzschlusselement am Kollektor angeordnet ist, das eine elektrisch leitende Kontaktbrücke aufweist, welche im Fall des Überschreitens einer Grenztemperatur einen Kurzschluss am Kollektor herbeiführt. Die Auslösung des Kurzschlusses hängt unmittelbar von der Temperatur des Ankers ab.

Die DE 44 11 712 A1 beschreibt eine Schutzeinrichtung gegen Wärmeüberlast eines Elektrokleinmotors für hohe thermische Belastbarkeit unter Verwendung eines Bimetallelements, welches den Motorspeisekreis bei bestimmter Erwärmung schlagartig öffnet.

### Aufgabe der vorliegenden Erfindung

Die Aufgabe der vorliegenden Neuerung besteht darin, einen verbesserten thermischen Schutz für die oben erwähnten Motorgattungen bereit zu stellen.

### Lösung der Aufgabe

Die vorstehende Aufgabe wird durch ein System gemäß den Merkmalen des Anspruchs 1 gelöst.

Zweckmäßige Ausgestaltungen des erfindungsgemäßen Elektromotors sind in den abhängigen Ansprüchen beansprucht.

Die Erfindung ermöglicht es, insbesondere bei Elektromotoren der Kompaktbauart mit hoher Leistungsdichte, einen verbesserten thermischen Schutz für die oben erwähnten Motorgattungen bereit zu stellen, der die Temperaturentwicklung unmittelbar am Ort des Entstehens erfasst und somit mit der geringsten Verzögerung und höchsten Genauigkeit. Dies ist ganz besonders wichtig bei solchen Elektromotoren, bei denen konstruktiv aufgrund einer hermetischen Kapselung die Integration eines leistungsfähigen Kühlsystems nicht oder nur erschwert möglich ist. Ein aktiver Sensor (im Sinne von Messung der Temperatur, Datenaufbereitung und Übertragung) wird direkt an die Stelle mit der erwarteten schnellsten Temperaturentwicklung platziert.

Erfindungsgemäß ist die Sensoreinheit deswegen unmittelbar an einem bewegten Teil bzw. unmittelbar am Rotor angebracht und somit in der Lage, die Temperatur unmittelbar am Rotor zu detektieren. Gerade die Betriebstemperaturen im Rotor sind entscheidend. Mit der Erfindung können die Betriebstemperaturen am Rotor unmittelbar an eine externe Empfangseinheit übermittelt werden. Die Sensoreinheit kann hierbei beispielsweise am Rotor zwischen zwei Wicklungsverläufen angeordnet oder auch im Bereich eines Wicklungsverlaufs in einer der vielen Längsausnehmungen des Rotors untergebracht sein.

Die Sensoreinheit als Baugruppe wird insbesondere dadurch realisiert, dass die elektrische Energie zum Betrieb der Sensoreinheit entweder aus den Wechselfeldern induziert oder über einen Abgriff eines Kollektors, sofern dieser vorhanden ist, abgezogen wird. Die Induktion aus den Wechselfeldern bietet sich vor allem für sogenannten bürstenlose Elektromotoren an, bei denen ein Kollektor nicht vorhanden ist.

Besonders vorteilhaft ist es, wenn eine Antenne mit hoher Polarisation zum Einsatz kommt, wie z. B. eine sogenannte Loop-Antenne oder keramische Antenne. Diese haben aufgrund ihrer Konstruktion eine hohe Polarisation und können zudem gut in der nötigen Miniaturisierung auf Leiterplatten angebracht werden. Eine keramische Antenne ist insbesondere auch besonders unempfindlich gegenüber äußeren Einflüssen, wie z.B. thermischen Einflüssen. Zudem haben sie ein geringes Gewicht.

Vorzugsweise wird als Arbeitsfrequenz ein SRD(Short Range)-ISM-Band verwendet, da diese Funkübertragungsbänder lediglich eine geringe Energie benötigen. Besonders zweckmäßig ist das sogenannte ISM 868MHz-Band.

Dadurch, dass die Funkleistung der Funkübertragung zumindest im Wesentlichen auf einen Radius bis 30 m, vorzugsweise bis 20 m, besonders vorzugsweise bis 10 m festgelegt ist, wird hierdurch eine Funkübertragung bei geringem Energiebedarf begründet, was die Sensoreinheit als selbstversorgendes Bauteil unterstützt. Innerhalb dieser Radien sollte das Sensorsignal noch, zumindest im Wesentlichen, signalstörungsfrei auswertbar sein. Darüber hinaus sollte es in der Lage sein, Gehäuseisolationen bzw. -abschirmungen zu durchdringen.

Die Temperatur-basierten Messsignale oder daraus abgeleiteten Daten bzw. Informationen werden erfindungsgemäß in Form von Datenpaketen zeitlich beabstandet zueinander versendet.

Die Datenpakete werden erfindungsgemäß wiederholt hintereinander versendet, um sicher zu stellen, dass bei einem Störungseinfluss, beispielsweise bedingt durch Elektromotor-begründeten Störeffekt, die Daten sicher empfangen werden.

Um die Richtwirkung der sich am Rotor befindlichen Antenne zu kompensieren, versendet die Sensoreinheit ein identisches Datenpaket bei einem Rotorversatz von 90° +/- 25° Drehwinkel, vorzugsweise von zumindest 90° +/-15° Drehwinkel, besonders vorzugsweise von zumindest 90° +/- 5° Drehwinkel, mindestens zweimal. Hierdurch kann eine erhöhte Empfangsqualität erzielt werden.

Zweckmäßigerweise nimmt die Sensoreinheit zum Versenden der Sensorsignale oder der daraus abgeleiteten Daten bzw. Informationen per Funk an die externe Empfangseinheit eine Abstimmungsroutine der Antenne vor. Es handelt sich hierbei um einen kurzen Einmessvorgang der Antenne, der die Antenne an die gegebenen Bedingungen abstimmt. Hierdurch wird die Verstimmung der Antenne aufgrund des Einbaus in die Umgebung des Motors beseitigt oder zumindest wesentlich reduziert.

Die Abstimmungsroutine der Antenne erfolgt zweckmäßigerweise entweder bei der Erstinbetriebnahme und/oder während des Betriebs, vorzugsweise vor dem Absenden eines Datenpakets. Die durch die Abstimmung ermittelten Anpassgrößen (insbesondere die Kapazität des Ausgangskreises der Sensoreinheit) werden im Speicher der Sensoreinheit vorzugsweise dauerhaft abgelegt, so dass der Abstimmvorgang zeitlich reduziert werden kann.

Die Funkübertragung der Sensoreinheit wird dadurch festgelegt, dass eine maximale Sendeleistung von 30 mW, vorzugsweise von 20 mW, besonders vorzugsweise von 10 mW und/oder eine Datenrate von 50 kbit/s, vorzugsweise von 40 kbit/s, besonders vorzugsweise von 30 kbit/s vorgesehen ist. Diese Festlegung trägt der Tatsache Rechnung, dass es sich bei der Sensoreinheit um eine selbstversorgende Baugruppe handelt, d.h. Energie lediglich nur in einem begrenzten Umfang zur Verfügung steht.

Aus dem gleichen Grund und aber auch durch die Bestimmungen des ISM 868MHz Bandes ist für die Übertragung die Länge des Datenpakets vorzugsweise kleiner oder gleich 0,1% der Belegungsdauer des Kanals.

Mit der Sensoreinheit können zusätzlich noch weitere Messwerte oder daraus abgeleitete Daten bzw. Informationen übertragen werden. Hierzu zählen insbesondere:
- die individuelle Adresse der Sensoreinheit und/oder
- Prüfdaten zur Paritätsmessung und/oder
- die Umdrehungsgeschwindigkeit des Rotors und/oder
- Vibrationsdaten der Rotorachse bzw. des Rotors und/oder
- positive und/oder negative Beschleunigung und/oder
- Informationen über eine Blockade des Rotors und/oder
- Daten zu Betriebszustände oberhalb einer Grenztemperatur vorzugsweise als Zeitmessung und/oder
- Sensoreinheits-Daten bezüglich Eigenversorgung sowie Energiehaushalt.

Auf Basis der Temperatur-basierten Messwerte sowie vorzugsweise der weiteren zusätzlichen Messwerte oder daraus abgeleiteter Daten bzw. Informationen kann eine optimierte Steuerung der Leistung und/oder des Betriebs des Elektromotors vorgenommen werden, und damit einerseits die Betriebssicherheit eines Elektromotors der eingangs genannten Bauweise andererseits die Betriebseffektivität wesentlich verbessert werden.

### Beschreibung der Erfindung anhand von Ausführungsbeispielen

Die Erfindung wird nachstehend anhand von Ausführungsbeispielen näher erläutert. Es zeigen:
- Fig. 1: eine stark vereinfachte, schematische Darstellung eines erfindungsgemäßen Systems eines Elektromotors mit einer Sensoreinrichtung zum Auslesen der Betriebstemperatur des Elektromotors an einer externen Empfangseinheit;
- Fig. 2: eine stark vereinfachte, schematische Prinzipdarstellung der einzelnen Funktionseinheiten einer Ausgestaltung des erfindungsgemäßen Systems in Teilschnittdarstellung;
- Fig. 3: eine stark vereinfachte, schematische Draufsicht auf den Rotor des Elektromotors gemäß Fig. 2;
- Fig. 4: eine stark vereinfachte, schematische Darstellung der einzelnen Funktionselemente der Sensoreinheit als Baugruppe mit Induktionsspule (Fig. 4a) oder Abgriff des Kollektors (Fig. 4b) sowie
- Fig. 5: eine beispielhafte stark vereinfachte, schematische Darstellung der Sendezeitpunkte eines Datenpakets entlang einer Rotordrehung.

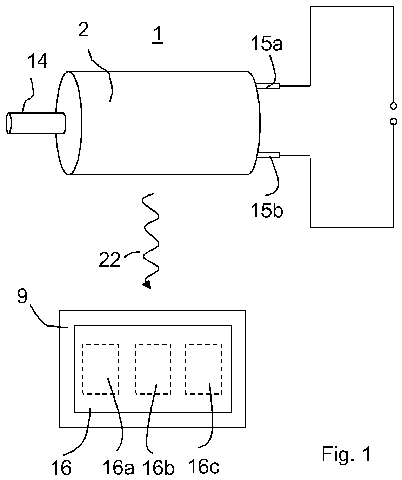

Bezugsziffer 1 in Fig. 1 zeigt einen Elektromotor in Kompaktbauweise mit einer an dessen Stirnseite vorragenden Motorwelle 14, einem zylindrischen Gehäuse 2 sowie Anschlüssen 15a, 15b zum Anschluss des Elektromotors 1 in einen elektronischen Stromkreis.

Elektromotoren in Kompaktbauweise werden üblicherweise im Werkzeugbereich (z. B. Bohrmaschinen) sowie bei kleinen Haushaltsgeräten (Rührstäben, Kaffeemaschinen und dergleichen) eingesetzt, da mit ihnen eine präzise Geschwindigkeitskontrolle bei der gegebenen Motorbauart möglich ist. Derartige Elektromotoren werden bei der gegebenen kompakten Bauform auf Effizienz getrimmt. Nicht selten werden Wirkungsgrade bis zu 95% erreicht. Kompaktmotoren besitzen üblicherweise eine zylindrische Bauform. Sie sind in der Lage, kurzzeitig bis zu 1.000 Watt Leistung abzugeben. Zu Elektromotoren in Kompaktbauform zählen auch Universalmotoren, die mit AC und DC betrieben werden können. Diese Motoren besitzen üblicherweise einen Kollektor, wobei der Rotor die sogenannten Ankerwicklung trägt, je nach Ausführung gepaart mit einer Statorwicklung oder Permanentmagneten.

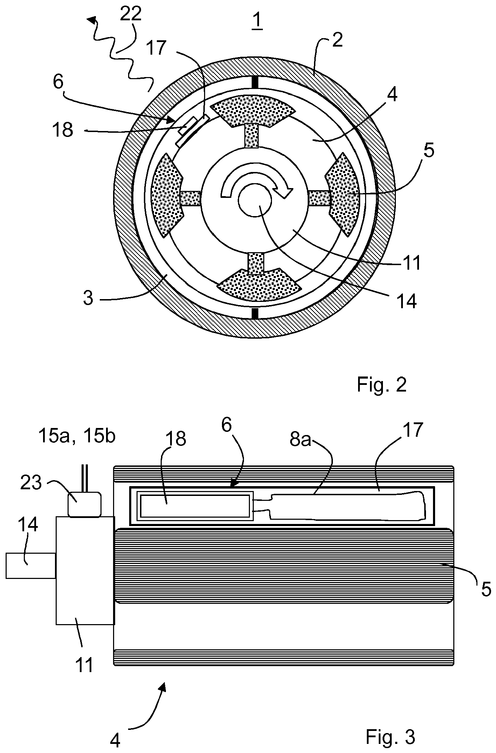

Der Elektromotor 2 des erfindungsgemäßen Systems umfasst eine (in Fig. 2 dargestellte) Sensoreinheit mit einem Temperaturfühler zur Erfassung Temperatur-basierter Messwerte, wobei diese oder daraus abgeleitete Daten bzw. Informationen über eine unidirektionale Funkverbindung 22 an eine externe Empfangseinheit 9 übertragen und dort auf einem Display 16 angezeigt werden. Neben den vorgenannten Messwerten bzw. Daten können im Rahmen der Funkverbindung 22 noch weitere Messwerte der Sensoreinheit oder daraus abgeleitete Daten bzw. Informationen übertragen werden. Die Anzeige der Temperatur bzw. noch weiter zu übertragender Messwerte, Daten sowie Informationen kann in speziell zugeordneten Displaybereichen 16a, 16b sowie 16b erfolgen. Die numerischen Daten können ebenso über Schnittstellen wie I2C oder SPI Bus an nachgeschaltete Regler- / Controllereinheiten weiter geführt werden.

Fig. 2 zeigt die wesentlichen Funktionselemente des Elektromotors 1. Der Elektromotor 1 umfasst ein zylindrisches Gehäuse 2, in dem sich ein Stator 3 befindet. Der Stator 3 ist in Fig. 2 lediglich schematisch dargestellt und kann entweder durch eine Statorwicklung oder durch Permanentmagneten (jeweils in Fig. 2 nicht dargestellt) realisiert sein. Die gegenüberliegenden Bereiche des Stators 3 sind unterschiedlich gepolt.

Innerhalb des Stators 3 befindet sich der Rotor 4, mit dem die Motorwelle 14 drehfest verbunden ist. Stirnseitig kann sich bei Bürstenabgriff zudem ein Kollektor 11 befinden, der dazu da ist, die elektrische Energie von innerhalb des Gehäuses 2 angeordneter Bürsten 23 (vgl. Fig. 3) abzugreifen.

Der Kollektor 11 versorgt die Rotorwicklungen 5 mit elektrischer Energie. Die jeweilige Rotorwicklung 5 umfasst einzelne stromführende Drähte, die jeweils mit einer Drahtisolation, z.B. aus Polyurethan, umgeben sind. Polyurethan besitzt eine thermische Belastungsfähigkeit von ca. 155°C. Bei dieser Temperatur kommt es noch zu keiner nachhaltigen Strukturschädigung.

Gemäß der vorliegenden Erfindung befindet sich eine Sensoreinheit 6 zur Erfassung Temperatur-basierter Messwerte als thermische Schutzeinrichtung unmittelbar am Rotor 4. Bei der in Fig. 2 bzw. 3 gezeigten Ausführungsform sitzt die Sensoreinheit 6 im äußeren Bereich des Rotors 4, beispielsweise in einem Bereich zwischen zwei parallel verlaufenden Rotorwicklungen 5 oder alternativ an der Oberseite einer Rotorwicklung 5. Die Sensoreinheit 6 dreht sich somit mit dem Rotor 4 mit. Beispielsweise kann die Sensoreinheit 6 als integrierter Schaltkreis 18 auf einer Platine 17 aufgebracht sein.

Zum Versenden von Sensorsignalen, Temperatur-basierter Messwerte oder daraus abgeleiteter Daten bzw. Informationen per Funk an die externe Empfangseinheit umfasst die Sensoreinheit 6 eine Antenne 8a, die z.B. als Loop-Antenne, wie in Fig. 3 dargestellt, auf die Platine 17 aufgedruckt sein kann. Alternativ kann als Antenne 8a auch eine sogenannte keramische Antenne vorgesehen sein. Sowohl eine Loop-Antenne als auch eine keramische Antenne verfügen konstruktionsbedingt über eine sehr hohe Polarisation.

Wie aus Fig. 2 ersichtlich, wird das Funksignal der Funkverbindung 22 von der Sensoreinheit 6 in radialer Richtung nach außen abgesandt.

Die Sensoreinheit 6 ist ein langgestrecktes Bauteil und verläuft in Längsrichtung des Rotors 4. Sie ist in geeigneter Weise mit dem Rotor bewegungsfest verbunden, beispielsweise verklebt. Vibrationen werden hierdurch vermieden.

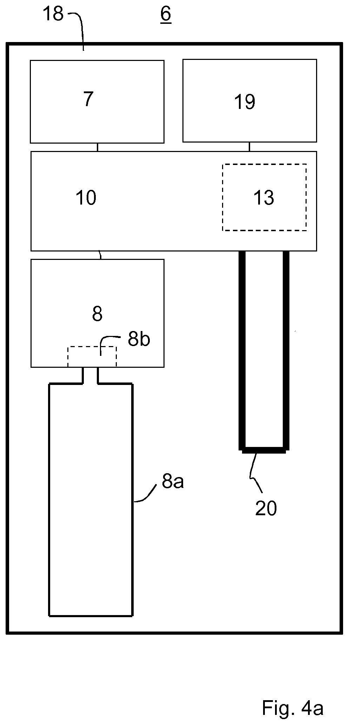

Fig. 4a zeigt die wesentlichen Funktionskomponenten der Sensoreinheit 6 in stark vereinfachter schematischer Darstellungsweise. Die Sensoreinheit 6 umfasst einen Mikrocontroller 10, welcher vorzugsweise über einen Speicher 13 verfügt. Des Weiteren ist ein Temperaturfühler 7 vorgesehen, der in der Lage ist, die Temperatur im Bereich des Rotors 4 zu erfassen und einen der Temperatur entsprechenden Temperatur-basierten Messwert zu erzeugen. Des Weiteren umfasst die Sensoreinheit 6 ein Funkmodul 8, mit dem der Temperatur-basierte Messwert oder daraus abgeleitete Daten bzw. Informationen an die externe Empfangseinheit 9 über die Funkverbindung 22 übermittelt werden können.

Bei der Sensoreinheit 6 handelt es sich erfindungsgemäß um ein selbstversorgendes Bauelement bzw. um eine selbstversorgende Baugruppe. Bei der in Fig. 4a dargestellten Ausführungsform erhält die Sensoreinheit 6 ihre Betriebsenergie mittels Induktion über die Spule 20 aus den Wechselfeldern des Stators 3. Diese Betriebsenergie muss zumindest für einen kurzen Zeitraum in einem Speicher in ausreichender Reserve vorhanden sein, um zyklisch, möglichst im Abstand von einigen Sekunden, die Informationen an das externe Empfangsmodul 9 zu senden. Die Sensoreinheit 6 umfasst hierfür, beispielsweise im Bereich des Mikroprozessors, eine (nicht dargestellte) Energiespeichereinrichtung, z.B. in Form eines aufladbaren Kondensators.

Des Weiteren kann die Sensoreinheit 6 noch weitere Sensoren umfassen, deren Messwerte bzw. Signale an die externe Empfangseinheit 9 zusätzlich übertragen werden. Vorzugsweise kann ein sogenannter Beschleunigungssensor 19 vorgesehen sein, welcher Daten hinsichtlich der Beschleunigung (negativ/positiv), der Umdrehungsgeschwindigkeit und/oder Vibrationen der Rotorachse erzeugt.

Da die Antenne durch den Einbau der Sensoreinheit 6 in die Umgebung des Rotors 4 verstimmt werden kann, durchläuft die Sensoreinheit 6 zweckmäßigerweise eine Abstimmungsroutine der Antenne durch einen kurzen Einmessvorgang derselben. Dieser Einmessvorgang kann lediglich eine kurze Zeit (z.B. 2 ms) dauern. Er kann bei der ersten Inbetriebnahme erfolgen oder auch später, beispielsweise vor der Übertragung eines Datenpakets. Im Rahmen dieser Abstimmungsroutine der Antenne 8a werden Anpassgrößen ermittelt, insbesondere die Kapazität eines Ausgangsantennenkreises 8b des Funkmoduls 8, die im Speicher 13 dauerhaft abgelegt werden können.

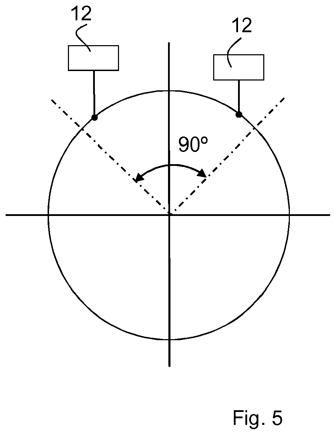

Die Übertragung der Messwerte bzw. darauf basierenden Daten erfolgt zyklisch bzw. kontinuierlich in Form von Datenpaketen an die Empfangseinheit. Um die Richtwirkung (vgl. Fig. 2) der Antenne 8a zu kompensieren, sollte die Sensoreinheit 6 das jeweilige Datenpaket möglichst bei einem Rotorversatz von etwa 90° ± 25° Drehwinkel, vorzugsweise von zumindest etwa 90° ± 15 ° Drehwinkel, besonders vorzugsweise von zumindest etwa 90° ± 5 ° Drehwinkel mindestens zweimal versenden. Bei der in Fig. 5 dargestellten Übertragungsart wird ein und dasselbe Datenpaket 12 innerhalb eines Drehwinkels von 90° zweimal versendet. Die Wahrscheinlichkeit eines guten Empfangs wird hierdurch erheblich vergrößert.

Die Länge des Datenpakets ist auf die Regularien in dem betreffenden Frequenzbereich abzustimmen und sollte 0,1% der Belegungsdauer nicht überschreiten. In Abstimmung mit einer zyklischen Messwerterfassung von beispielsweise alle 4s bedeutet das ein Datenpaket von max. 4ms. Über 30 kbit/s wären somit ca. sechs Werte mit 8-bit-Auflösung (netto übertragbar). Zweckmäßigerweise enthält das betreffende Datenpaket noch eine individuelle Adresse der Sensoreinrichtung und/oder weitere Prüfdaten zur Paritäts-/ Plausibilitätsprüfung. Die Datenrate ist so zu wählen, dass der Energieverbrauch während des Sendens klein gehalten werden kann, jedoch auf der Seite der Empfangseinheit 9 noch eine ausreichende Störsicherheit gegeben ist. Für die Übertragung der Messwerte bzw. Daten ist eine maximale Sendeleistung von 30 mW, vorzugsweise von 20 mW, besonders vorzugsweise von 10 mW und/oder eine Datenrate von 50 kbit/s, vorzugsweise von 40 kbit/s, besonders vorzugsweise von 30 kbit/s vorgesehen. Gute Ergebnisse liefern hier zum Beispiel eine Leistung von 10 mW mit 30 kbit/s Datenrate.

Zusätzlich zu den Temperatur-basierten Werten bzw. Daten können von der Sensoreinheit 6 zusätzliche Messwerte oder daraus abgeleitete Daten bzw. Informationen übertragen werden, die mindestens eine Position der Folgendes enthalten:
- die individuelle Adresse der Sensoreinheit (6) und/oder
- die Prüfdaten zur Paritätsmessung und/oder
- die Umdrehungsgeschwindigkeit des Rotors (4) und/oder
- Vibrationsdaten der Rotorachse bzw. des Rotors (4) und/oder
- positive und/oder negative Beschleunigung und/oder
- eine Blockade des Rotors (4) und/oder
- Daten zu Betriebszustände oberhalb einer Grenztemperatur vorzugsweise als Zeitmessung und/oder
- Sensoreinheits-Daten bezüglich Eigenversorgung sowie Energiehaushalt.

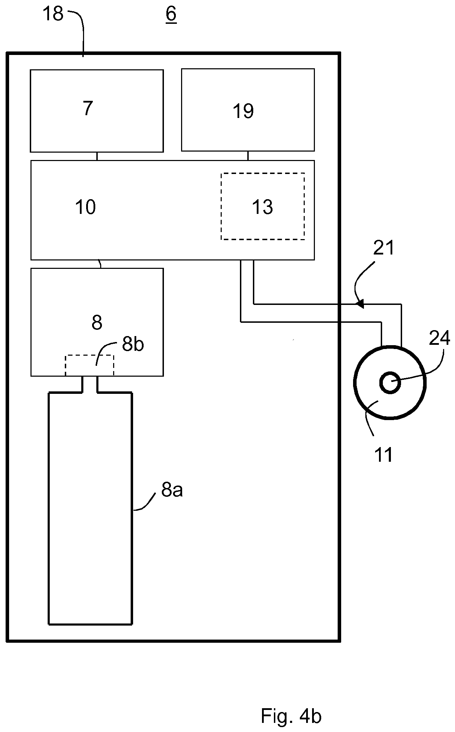

Fig. 4b zeigt eine alternative Ausgestaltung der Sensoreinheit 6. Bei dieser Ausgestaltung erfolgt die Zurverfügungstellung der Betriebsenergie für die Sensoreinheit 6 aus einem Abgriff 21 des Kollektors 11. Auch bei dieser Ausgestaltung muss keine eigene Energieversorgung für die Sensoreinheit 6 vorgesehen sein.

Es wird ausdrücklich darauf hingewiesen, dass auch Kombinationen von Einzelmerkmalen untereinander bzw. Einzelmerkmale mit Teilmerkmalgruppen ausdrücklich als erfindungswesentlich angesehen werden und vom Offenbarungsgehalt der Anmeldung umfasst sind.

### BEZUGSZEICHENLISTE

- 1: Elektromotor
- 2: Gehäuse
- 3: Stator
- 4: Rotor
- 5: Rotorwicklung
- 6: Sensoreinheit
- 7: Temperaturfühler
- 8: Funkmodul
- 8a: Antenne
- 8b: Ausgangsantennenkreis
- 9: Empfangseinheit
- 10: Mikrocontroller
- 11: Kollektor
- 12: Datenpaket
- 13: Speicher
- 14: Motorwelle
- 15a: Anschlussklemme
- 15b: Anschlussklemme
- 16: Display
- 16a: Displaybereich
- 16b: Displaybereich
- 16c: Displaybereich
- 17: Platine
- 18: integrierter Schaltkreis
- 19: Beschleunigungssensor
- 20: Spule
- 21: Abgriff
- 22: Funkverbindung
- 23: Bürste

## Patentansprüche

1. System umfassend einen Elektromotor (1), insbesondere Elektromotor der Kompaktbauart, sowie eine externe Empfangseinheit (9),
wobei der Elektromotor (1) ausgestattet ist mit
einem Gehäuse (2),
einem Stator (3),
einem Rotor (4) mit darauf befindlicher Rotorwicklung (5) oder Permanentmagneten,
einer thermischen Schutzeinrichtung zum Schutz des Elektromotors vor Überhitzung, wobei
als thermische Schutzeinrichtung eine am Rotor (4) untergebrachte Sensoreinheit (6) vorgesehen ist, wobei die Sensoreinheit (6)
einen Temperaturfühler (7) zur Erfassung Temperatur-basierter Messwerte, und
ein Funkmodul (8) mit Antenne (8a) zum Versenden von Sensorsignalen Temperatur-basierter Messwerte umfasst, wobei
aus den Temperatur-basierten Messwerten abgeleitete Daten per Funk an die externe Empfangseinheit (9) übertragen werden,
**dadurch gekennzeichnet, dass**
die Sensoreinheit (6) einen Speicher (13) und einen Mikrocontroller (10) umfasst,
wobei es sich bei der Sensoreinheit (6) um eine selbstversorgende Baugruppe handelt,
wobei zum Versenden der Sensorsignale Temperatur-basierter Messwerte oder daraus abgeleiteter Daten per Funk die Sensoreinheit (6) Datenpakete (12) zeitlich beabstandet zueinander versendet,
wobei die Sensoreinheit (6) ein Datenpaket (12) wiederholt hintereinander versendet, und
wobei die Sensoreinheit (6) dasselbe Datenpaket (12) über einen festgelegten Rotorversatz mindestens zweimal versendet.

2. System nach Anspruch 1, **dadurch gekennzeichnet, dass** die elektrische Energie zum Betrieb der Sensoreinheit (6) aus den Wechselfeldern induziert wird oder über einen Abgriff (21) eines Kollektors (11) abgezogen wird.

3. System nach mindestens einem der vorhergehenden Ansprüche, **dadurch gekennzeichnet, dass** als Antenne (8a) eine Loopantenne oder eine keramische Antenne vorgesehen ist.

4. System nach mindestens einem der vorhergehenden Ansprüche, **dadurch gekennzeichnet, dass** als Arbeitsfrequenz ein SRD (short range) ISM Band, insbesondere das ISM 868MHz-Band vorgesehen ist.

5. System nach mindestens einem der vorhergehenden Ansprüche, **dadurch gekennzeichnet, dass** die Funkleistung der Funkübertragung zumindest im Wesentlichen auf einen Radius bis 30m, vorzugsweise bis 20m, vorzugsweise bis 10m festgelegt ist.

6. System nach Anspruch 1, **dadurch gekennzeichnet, dass** die Sensoreinheit (6) dasselbe Datenpaket (12) über einen Rotorversatz von zumindest etwa 90° ± 35° Drehwinkel, vorzugsweise von zumindest etwa 90° ± 25° Drehwinkel, vorzugsweise von zumindest etwa 90° ± 15° Drehwinkel, besonders vorzugsweise von zumindest etwa 90° Drehwinkel mindestens zweimal versendet.

7. System nach mindestens einem der vorhergehenden Ansprüche, **dadurch gekennzeichnet, dass** zum Versenden der Sensorsignale oder der daraus abgeleiteten Daten per Funk an die externe Empfangseinheit (9) die Sensoreinheit (6) eine Abstimmungsroutine der Antenne (8a) vornimmt.

8. System nach Anspruch 7, **dadurch gekennzeichnet, dass** die Abstimmungsroutine der Antenne (8a) bei der Erstinbetriebnahme und/oder während des Betriebs vor dem Absenden eines Datenpakets (12) erfolgt.

9. System nach Anspruch 7 oder 8, **dadurch gekennzeichnet, dass** die aus der Abstimmungsroutine der Antenne (8a) ermittelten Anpassgrößen, insbesondere die Kapazität eines Ausgangsantennenkreises (8b) des Funkmoduls (8), im Speicher (13) der Sensoreinheit (6) abgelegt werden.

10. System nach mindestens einem der vorhergehenden Ansprüche, **dadurch gekennzeichnet, dass** für die Übertragung
eine maximale Sendeleistung von 30mW, vorzugsweise von 20mW, besonders vorzugsweise von 10 mW und/oder
eine Datenrate von 50kbit/s, vorzugsweise von 40kbit/s, besonders vorzugsweise von 30kbit/s vorgesehen ist.

11. System nach mindestens einem der vorhergehenden Ansprüche, **dadurch gekennzeichnet, dass** für die Übertragung die Länge des Datenpakets (12) kleiner oder gleich 0,1% der Belegungsdauer des Kanals ist.

12. System nach mindestens einem der vorhergehenden Ansprüche, **dadurch gekennzeichnet, dass** von der Sensoreinheit (6) zusätzlich Messwerte oder daraus abgeleiteter Daten bzw. Informationen übertragen werden, die folgendes enthalten:
die individuelle Adresse der Sensoreinheit (6) und/oder
die Prüfdaten zur Paritätsmessung und/oder
die Umdrehungsgeschwindigkeit des Rotors (4) und/oder
Vibrationsdaten der Rotorachse bzw. des Rotors (4) und/oder
positive und/oder negative Beschleunigung und/oder
eine Blockade des Rotors (4) und/oder
Daten zu Betriebszustände oberhalb einer Grenztemperatur vorzugsweise als Zeitmessung und/oder
Sensoreinheits-Daten bezüglich Eigenversorgung sowie Energiehaushalt.

13. System nach mindestens einem der vorhergehenden Ansprüche, **dadurch gekennzeichnet, dass** auf Basis der Temperatur-basierten Messwerte sowie vorzugsweise der weiteren zusätzlichen Messwerte oder daraus abgeleiteter Daten eine Steuerung der Leistung und/oder des Betriebs des Elektromotors (1) vorgenommen wird.

## Claims

1. A system including an electric motor (1), in particular an electric motor of the compact design, and an external receiving unit (9), wherein the electric motor (1) is equipped with
a housing (2),
a stator (3),
a rotor (4) having a rotor winding (5) located thereon or permanent magnets,
a thermal protective device for protecting the electric motor against overheating, wherein
a sensor unit (6) accommodated at the rotor (4) is provided as a thermal protective device, wherein the sensor unit (6) includes
a temperature sensor (7) for recording temperature-based measured values, and
a radio module (8) with antenna (8a) for sending sensor signals temperature-based measured values, wherein
data derived from the temperature-based measured values are transmitted via radio to the external receiving unit (9),
**characterized in that**
the sensor unit (6) has a memory (13) and a microcontroller (10),
wherein the sensor unit (6) is a self-powered assembly,
wherein for sending the sensor signals, temperature-based measured values or data derived therefrom via radio, the sensor unit (6) sends data packets (12) at different times,
wherein the sensor unit (6) sends a data packet (12) repeatedly one after the other, and wherein the sensor unit (6) sends the same data packet (12) over an established rotor offset at least twice.

2. The system of claim 1, **characterized in that** the electrical energy for operating the sensor unit (6) is induced from the alternating fields or is withdrawn via a tap (21) of a commutator (11).

3. The system of at least one of the preceding claim, **characterized in that** a loop antenna or a ceramic antenna is provided as an antenna (8a).

4. The system of at least one of the preceding claims, **characterized in that** a SRD (short range) ISM band, in particular the ISM 868MHz band, is provided as operating frequency.

5. The system of at least one of the preceding claims, **characterized in that** the radio performance of the radio transmission is established at least essentially at a radius of up to 30 m, preferably up to 20 m, preferably up to 10 m.

6. The system of claim 1, **characterized in that** the sensor unit (6) sends the same data packet (12) at least twice over a rotor offset of at least approximately 90° ± 35° rotation angle, preferably of at least approximately 90° ± 25° rotation angle, preferably of at least approximately 90° ± 15° rotation angle, particularly preferably of at least approximately 90° rotation angle.

7. The system of at least one of the preceding claims, **characterized in that** the sensor unit (6) carries out a tuning routine of the antenna (8a) for sending the sensor signals or data derived therefrom via radio to the external receiving unit (9).

8. The system of claim 7, **characterized in that** the tuning routine of the antenna (8a) takes place at initial start-up and/or during operation prior to the transmission of a data packet (12).

9. The system of claim 7 or 8, **characterized in that** the adjustment parameters ascertained from the tuning routine of the antenna (8a), in particular the capacitance of an output antenna circuit (8b) of the radio module (8), are stored in the memory (13) of the sensor unit (6).

10. The system of at least one of the preceding claims, **characterized in that,** for the transmission
a maximum transmission power of 30 mW, preferably of 20 mW, particularly preferably of 10 mW and/or
a data rate of 50 kbit/s, preferably of 40 kbit/s, particularly preferably of 30 kbit/s are/is provided.

11. The system of at least one of the preceding claims, **characterized in that** the length of the data packet (12) for the transmission is less than or equal to 0.1% of the holding time of the channel.

12. The system of at least one of the preceding claims, **characterized in that** measured values or data or information derived therefrom area additionally transmitted from the sensor unit (6), which contain the following:
the unique address of the sensor unit (6) and/or the test data for the parity measurement and/or
the circumferential speed of the rotor (4) and/or
vibration data of the rotor axle or of the rotor (4) and/or
positive and/or negative acceleration and/or
a blockage of the rotor (4) and/or
data on operating states above a limiting temperature preferably as time measurement and/or
sensor unit data regarding self-supply and energy balance.

13. The system of at least one of the preceding claims, **characterized in that** a control of the performance and/or the operation of the electric motor (1) is carried out on the basis of the temperature-based measured values and preferably the further additional measured values or data derived therefrom.

## Revendications

1. Système, comprenant un moteur électrique (1), notamment un moteur électrique du type de construction compacte, ainsi qu'une unité de réception (9) externe, le moteur électrique (1) étant équipé
d'un boîtier (2),
d'un stator (3),
d'un rotor (4) sur lequel se trouve un enroulement de rotor (5) ou un aimant permanent,
d'un dispositif de protection thermique destiné à protéger le moteur électrique contre une surchauffe,
le dispositif de protection thermique présent étant une unité de détection (6) montée sur le rotor (4), l'unité de détection (6) comportant
une sonde de température (7) destinée à acquérir des valeurs de mesure basées sur la température, et
un module radioélectrique (8) pourvu d'une antenne (8a) destiné à émettre des signaux de détecteur des valeurs de mesure basées sur la température,
des données dérivées des valeurs de mesure basées sur la température étant transmises par radio à l'unité de réception (9) externe,
**caractérisé en ce que**
l'unité de détection (6) comporte une mémoire (13) et un microcontrôleur (10),
l'unité de détection (6) étant un sous-ensemble autoalimenté,
en vue d'émettre les signaux de détecteur des valeurs de mesure basées sur la température ou les données qui en sont dérivées par radio, l'unité de détection (6) émettant des paquets de données (12) espacés dans le temps les uns des autres,
l'unité de détection (6) émettant un paquet de données (12) de manière répétée consécutivement, et
l'unité de détection (6) émettant le même paquet de données (12) au moins deux fois sur un décalage de rotor spécifié.

2. Système selon la revendication 1, **caractérisé en ce que** l'énergie électrique destinée à faire fonctionner l'unité de détection (6) est induite par le champ alternatif ou soutirée d'un collecteur (11) par le biais d'une prise (21).

3. Système selon au moins l'une des revendications précédentes, **caractérisé en ce que** l'antenne (8a) présente est une antenne-cadre ou une antenne en céramique.

4. Système selon au moins l'une des revendications précédentes, **caractérisé en ce que** la fréquence de fonctionnement prévue est une bande ISM SRD (courte portée), notamment la bande ISM de 868 MHz.

5. Système selon au moins l'une des revendications précédentes, **caractérisé en ce que** la puissance radioélectrique de la radiotransmission est spécifiée au moins sensiblement sur un rayon jusqu'à 30 m, de préférence jusqu'à 20 m, de préférence jusqu'à 10 m.

6. Système selon la revendication 1, **caractérisé en ce que** l'unité de détection (6) émet le même paquet de données (12) au moins deux fois sur un décalage de rotor d'au moins environ 90° ± 35° d'angle de rotation, de préférence d'au moins environ 90° ± 25° d'angle de rotation, d'au moins environ 90° ± 15° d'angle de rotation, notamment d'au moins environ 90° d'angle de rotation.

7. Système selon au moins l'une des revendications précédentes, **caractérisé en ce qu'**en vue d'émettre les signaux de détecteur ou les données qui en sont dérivées par radio à l'unité de réception (9) externe, l'unité de détection (6) effectue une routine d'accord de l'antenne (8a) .

8. Système selon la revendication 7, **caractérisé en ce que** la routine d'accord de l'antenne (8a) s'effectue lors de la première mise en service et/ou pendant le fonctionnement avant l'envoi d'un paquet de données (12) .

9. Système selon la revendication 7 ou 8, **caractérisé en ce que** les grandeurs d'adaptation déterminées à partir de la routine d'accord de l'antenne (8a), notamment la capacité d'un circuit d'antenne de sortie (8b) du module radioélectrique (8), sont stockées dans la mémoire (13) de l'unité de détection (6).

10. Système selon au moins l'une des revendications précédentes, **caractérisé en ce qu'**une puissance d'émission maximale de 30 mW, de préférence de 20 mW, notamment de préférence de 10 mW et/ou un débit de données de 50 kbit/s, de préférence de 40 kbit/s, notamment de préférence de 30 kbit/s est prévu pour la transmission.

11. Système selon au moins l'une des revendications précédentes, **caractérisé en ce que** pour la transmission, la longueur du paquet de données (12) est inférieure ou égale à 0,1 % de la durée d'occupation du canal.

12. Système selon au moins l'une des revendications précédentes, **caractérisé en ce que** des valeurs de mesure supplémentaires ou encore des données ou des informations qui en sont dérivées sont en plus transmises par l'unité de détection (6), lesquelles contiennent ce qui suit :
l'adresse individuelle de l'unité de détection (6) et/ou les données de contrôle servant à la mesure de la parité et/ou
la vitesse de rotation du rotor (4) et/ou
des données de vibration de l'axe de rotor ou du rotor (4) et/ou
une accélération positive et/ou négative et/ou
un blocage du rotor (4) et/ou
des données à propos des états de fonctionnement au-dessus d'une température limite, de préférence sous la forme d'une mesure dans le temps, et/ou
des données d'unité de détection concernant l'alimentation en énergie ainsi que le bilan énergétique.

13. Système selon au moins l'une des revendications précédentes, **caractérisé en ce qu'**une commande de la puissance et/ou du fonctionnement du moteur électrique (1) est effectuée sur la base des valeurs de mesure basées sur la température ainsi que de préférence des valeurs de mesure supplémentaires ou des données qui en sont dérivées.
